# EUROPEAN PATENT SPECIFICATION

(11) **EP 3 908 123 B1**
(45) Date of publication and mention of the grant of the patent: **15.07.2026**
(21) Application number: 20738701.0
(22) Date of filing: 09.01.2020
(51) Int. Cl.: A23K 20/105, A23K 20/189, A23K 40/00

(54) **ESSENTIAL OIL PARTICLES WITH IMPROVED STABILITY AND COMPOSITIONS THEREOF**
PARTIKEL ÄTHERISCHER ÖLE MIT VERBESSERTER STABILITÄT UND ZUSAMMENSETZUNGEN DAVON
PARTICULES D'HUILE ESSENTIELLE À STABILITÉ AMÉLIORÉE ET COMPOSITIONS ASSOCIÉES

(30) Priority: 11.01.2019 US 201962791304 P
(43) Date of publication of application: 17.11.2021
(60) Divisional application: 26184296.7
(73) Proprietor: Novus International, Inc., Chesterfield, MO 63005 (US)
(72) Inventor: TUCKER, Heather, Chesterfield, MO 63005 (US); MALDONADO, Cristina, Chesterfield, MO 63005 (US); VISO, Antonio, Chesterfield, MO 63005 (US)
(74) Representative: Greaves Brewster LLP
(86) International application number: PCT/US2020/012871
(87) International publication number: WO 2020/146589

(56) References cited:
- EP-A1- 3 545 763
- WO-A1-2018/059732
- WO-A1-2020/146587
- RU-C2- 2 297 159
- RU-C2- 2 297 159
- US-A1- 2008 075 796
- US-A1- 2008 253 976
- US-A1- 2008 253 976
- US-B2- 6 790 453
- COBELLIS GABRIELLA ET AL: "Critical evaluation of essential oils as rumen modifiers in ruminant nutrition: A review", SCIENCE OF THE TOTAL ENVIRONMENT, ELSEVIER, AMSTERDAM, NL, vol. 545, 4 January 2016 (2016-01-04), pages 556 - 568, XP029395955, ISSN: 0048-9697, DOI: 10.1016/J.SCITOTENV.2015.12.103
- SAI SATEESH SAGIRI ET AL: "Review on Encapsulation of Vegetable Oils: Strategies, Preparation Methods, and Applications", POLYMER-PLASTICS TECHNOLOGY AND ENGINEERING, vol. 55, no. 3, 15 June 2015 (2015-06-15), US, pages 291 - 311, XP055321225, ISSN: 0360-2559, DOI: 10.1080/03602559.2015.1050521
- AMR M. BAKRY ET AL: "Microencapsulation of Oils: A Comprehensive Review of Benefits, Techniques, and Applications", COMPREHENSIVE REVIEWS IN FOOD SCIENCE AND FOOD SAFETY, vol. 15, no. 1, 13 November 2015 (2015-11-13), US, pages 143 - 182, XP055359103, ISSN: 1541-4337, DOI: 10.1111/1541-4337.12179
- "Cinnamaldehyde", WIKIPEDIA, 16 August 2018 (2018-08-16), XP055724940, Retrieved from the Internet <URL:https://en.wikipedia.org/w/index.php?title=Cinnamaldehyde&oldid=855180713> [retrieved on 20200311]

## Description

### FIELD

The present disclosure provides essential oil compositions.

### BACKGROUND

Essential oils are aromatic oily liquids obtained from plant material. It has been long recognized that some essential oils have antimicrobial, antibacterial, antioxidant, and/or anti-inflammatory effects. The volatile aromatic compounds present in essential oils, however, are chemically unstable and susceptible to oxidative deterioration, especially when exposed to oxygen, light, moisture, and heat. Similarly, the quality of a product fortified with the oils may deteriorate due to oxidative degradation, formation of unpleasant tastes and off-flavors, and the generation of free radicals. These changes have a negative effect on the shelf-stability, biological activity, and sensory properties of essential products. Attempts have been made to stabilize and protect essential oils through the use of functional coatings or encapsulation in shells. A need still exists, however, for improved means for protecting essential oils, especially when the essential oils are to be added to animal feeds or feed premixes.

WO2018059732A1 discloses a particle containing at least a volatile substance comprising a core comprising at least one matrix material and the at least one volatile substance and at least one coating layer, whereby a first coating layer is a non-confluent layer comprising at least a carrier material, whereby optionally the non-confluent layer contains at least one hydrophobic substance, and optionally the particle is surrounded by at least one confluent layer and / or further non-confluent layer(s); and a process for producing the same.

### SUMMARY

The invention is set out in the appended set of claims.

One aspect of the present disclosure provides a composition comprising a plurality of particles comprising at least two essential oils dispersed in a matrix, wherein the matrix comprises at least one agglomerating agent comprising arabic gum, and the at least two essential oils consist of garlic oil and cinnamaldehyde, wherein cinnamaldehyde is present in an amount from about 17.5% to about 21.5% by weight of the composition, garlic oil is present in an amount from about 2.5% to about 3.1% by weight of the composition, arabic gum is present in an amount from about 70% to about 75% by weight of the composition, and the matrix is present in an amount from about 65% to about 80% by weight of the composition. In general, the matrix comprises at least one agglomerating agent in which the essential oils are dispersed or embedded.

Other aspects and iterations of the disclosure are described in more detail below.

### BRIEF DESCRIPTION OF THE DRAWINGS

FIG. **1A** presents the level of propionate produced in a continuous culture system in the presence of MHA (left), agglomerated composition, Agg Comp (right), or MHA+Agg Comp (center). *P* = 0.0014.
FIG. **1B** shows the level of butyrate produced in a continuous culture system in the presence of MHA (left), Agg Comp (right), or MHA+Agg Comp (center). *P* = 0.0037
FIG. **1C** presents the level of acetate produced in a continuous culture system in the presence of MHA (left), Agg Comp (right), or MHA+Agg Comp (center).
FIG. **2A** shows the ratio of acetate: propionate produced in a continuous culture system in the presence of MHA (left), Agg Comp (right), or MHA+Agg Comp (center). *P* = 0.0070.
FIG. **2B** presents the total level of volatile fatty acids (VFA) produced in a continuous culture system in the presence of MHA (left), Agg Comp (right), or MHA+Agg Comp (center). *P* = 0.0756.

### DETAILED DESCRIPTION

The invention is set out in the appended set of claims.

The present disclosure provides agglomerated compositions comprising essential oils dispersed in matrices such that the essential oils have improved stability and extended shelf-life.

### (I) Compositions Comprising Essential Oils

One aspect of the present disclosure provides compositions comprising essential oils dispersed in a matrix comprising one or more agglomerating agents, as defined in the claims. In general, the essential oils exist as droplets embedded in the matrix of agglomerating agent(s). The compositions disclosed herein, therefore, can be described as agglomerated compositions comprising small particles of essential oil and small particles of agglomerating agent, wherein the small particles are clustered together (agglomerated) into larger particles. In some embodiments, the essential oil compositions disclosed herein may be particulate, i.e., comprising a plurality of particles. In general, the essential oil compositions disclosed herein are devoid of coatings, outer shells, and/or hydrophobic layers.

### (I)(a) Essential oils

Essential oils, also known as volatile oils or ethereal oils, are concentrated hydrophobic liquids containing volatile aroma compounds obtained from fruits, seeds, flowers, bark, stems, roots, leaves, or other parts of a plant. Essential oils are generally obtained by distillation (e.g., steam distillation), solvent extraction, expression, and/or cold pressing. The specific chemical compound imparting the "essence of" of the plant's fragrance may be isolated from the plant, or it may be chemically synthesized. The term "essential oil" generally refers to the specific chemical compound of which the essential oil is composed, but can also refer to the oil of the plant from which it was extracted.

The compositions disclosed herein comprise at least two essential oils, and the at least two essential oils consist of garlic oil and cinnamaldehyde, as defined in the claims.

The compositions disclosed herein comprise at least two essential oils, and the at least two essential oils consist of garlic oil and cinnamaldehyde, as defined in the claims.

The at least two essential oils consist of cinnamaldehyde and garlic oil. In embodiments, the ratio of cinnamaldehyde and garlic oil may range from about 6:1 to about 8:1, or may be about 7:1. The composition comprises from about 17.5% to about 21.5% by weight of cinnamaldehyde and from about 2.5% to about 3.1% by weight of garlic oil. In other embodiments, the composition may comprise from about 18.5% to about 20.5% by weight of cinnamaldehyde and from about 2.7% to about 2.9% by weight of garlic oil. In specific embodiments, the composition may comprise about 19.5% by weight of cinnamaldehyde and about 2.8% by weight of garlic oil.

### (I)(b) Matrix Comprising Agglomerating Agent

The compositions disclosed herein also comprise a matrix comprising at least one agglomerating agent in which the essential oils are dispersed or embedded. "Agglomerating agent" as used herein refers to any substance that produces bonding strength in agglomerated particles or forms bridges between the smaller particles of the agglomerated particle. Suitable agglomerating agents include complex carbohydrates, proteins, or combinations thereof. The matrix comprises at least one agglomerating agent comprising arabic gum, as defined in the claims.

Non-limiting examples of further suitable complex carbohydrates include agar, albizia gum, alginate, arabinoxylan, beta glucan, carob gum, carrageenan, cellulose, cellulose derivative, chicle gum, chitosan, curdlan, dammar gum, dextran, diutan gum, fenugreek gum, fucoidan, galactomannan, gellan gum, ghatti gum, glucomannan, guar gum, hakea gum, honey locust gum, hupu gum, karaya gum, khaya gum, lignin, locust bean gum, maltodextrin, mastic gum, pectin, pullulan, starch, modified starch (e.g., octenyl succinate anhydride (OSA) modified starch), tamarind gum, tara gum, tragacanth gum, welan gum, or xanthan gum. Suitable proteins include without limit collagen, gelatin, milk protein, egg protein, pea protein, soy protein, wheat protein, zein protein, isolates or hydrolysates of any of the foregoing, or modified versions of any of the foregoing.

The at least one agglomerating agent comprises arabic gum, as defined in the claims. In some embodiments, the agglomerating agent comprises arabic gum and maltodextrin or arabic gum and modified starch.

The amount of arabic gum present in the compositions is from about 70% to about 75% by weight of the composition. In specific embodiments, the amount of arabic gum present in the compositions may range from about 72% to about 73% by weight of the composition.

### (I)(c) Water

The agglomerated compositions disclosed herein also comprise water. In general, the amount of water is less than about 10% by weight. In some embodiments, the amount of water may range from about 2% to about 8%, or from about 4% to about 6%, as long as the total amount of essential oils, agglomerating agent(s), and water equals 100% by weight.

### (I)(d) Optional Excipients

In some embodiments, the agglomerated composition may comprise one or more optional excipients. Suitable excipients include antioxidants, surfactants, fillers, binders, or combinations thereof.

In specific embodiments, the optional excipient may be an antioxidant. The antioxidant may be natural or synthetics. Non-limiting examples of suitable antioxidants include ascorbyl palmitate, ascorbyl stearate, butylated hydroxyanisole (BHA), butylated hydroxytoluene (BHT), 6-ethoxy-1,2-dihydro-2,2,4-trimethylquinoline (ethoxyquin), ethyl gallate, propyl gallate, tertiary butyl hydroquinone (TBHQ), or combination thereof.

In other embodiments, the optional excipient may be a surfactant. The surfactant may be a nonionic surfactant, an anionic surfactant, or a cationic surfactant. Non-limiting examples of suitable nonionic surfactants (including zwitterionic surfactants that have no net charge) include alcohol ethoxylates, alkyl phenol ethoxylates (e.g., nonylphenyl ethoxylate), thiol ethoxylates, fatty acid ethoxylates, glycerol esters, hexitol esters, amine ethoxylates, alkylamide ethoxylates, and imide ethoxylates. Suitable anionic surfactants include, but are not limited to, alkyl sulfates, alkyl ether sulfates, sulfated alkanolamides, glyceride sulfates, dodecyl benzene sulfonates, alkylbenzene sulfonates, alpha olefin sulfonates, and sulfocarboxylic compounds. Non-limiting examples of suitable cationic surfactants include alkyl amines, quaternary alkyl ammoniums, ester amines, and ether amines. In some embodiments, the surfactant may be any of those disclosed in US Pat. Nos. 9,169,203, 9,902,690, or US Publication No. 2017/0002295.

In still other embodiments, the optional excipient may be a filler. Suitable fillers include without limit cellulose, microcrystalline cellulose, cellulose ethers (e.g., ethyl cellulose, methyl cellulose, hydroxypropyl cellulose, hydroxypropyl methylcellulose, sodium carboxymethylcellulose, etc.), cellulose esters (i.e., cellulose acetate, cellulose butyrate, and mixtures thereof), starches (e.g., corn starch, rice starch, potato starch, tapioca starch, and the like), modified starches, pregelatinized starches, phosphated starches, starch-lactose, starch-calcium carbonate, sodium starch glycolate, glucose, fructose, sucrose, lactose, xylose, lactitol, mannitol, malitol, sorbitol, xylitol, maltodextrin, trehalose, calcium carbonate, calcium sulfate, calcium phosphate, calcium silicate, magnesium carbonate, magnesium oxide, talc, or combinations thereof.

In further embodiments, the optional excipient may be a binder. Non-limiting examples of suitable binders include starches (e.g., corn starch, potato starch, wheat starch, rice starch, and the like), pregelatinized starch, hydrolyzed starch, cellulose, microcrystalline cellulose, cellulose derivatives (e.g., methylcellulose, ethylcellulose, hydroxypropylcellulose, hydroxypropylmethylcellulose, sodium carboxymethylcellulose, and the like), saccharides (e.g., sucrose, lactose, and so forth), sugar alcohols (e.g., maltitol, sorbitol, xylitol, polyethylene glycol, and the like), alginates (e.g., alginic acid, alginate, sodium alginate, and so forth), gums (e.g., gum arabic, guar gum, gellan gum, xanthan gum, and the like), pectins, gelatin, C12-C18 fatty acid alcohols, polyvinylpyrrolidinone (also called copovidone), polyethylene oxide, polyethylene glycol, polyvinyl alcohols, waxes (e.g., candelilla wax, carnauba wax, beeswax, and so forth), or combinations of any of the forgoing.

### (I)(e) Physical Form

In specific embodiments, the agglomerated compositions are particulate in form and comprise a plurality of particles. In general, the plurality of particles has an average particle size that is less than about 1000 micrometers (µm). In various embodiments, the average particle size of the plurality of particles ranges from about 10 to about 500 µm, from 50 µm to about 250 µm, or from about 100 µm to about 200 µm. In specific embodiments, the plurality of particles has an average particle size of about 150 µm.

### EXAMPLES

The following examples illustrate various embodiments of the present disclosure.

### Example 1: Preparation of Agglomerated Composition

A solution was prepared by dissolving 30 g of arabic gum in 60 g of water. To this was added 8.6 g of cinnamaldehyde and 1.4 g of garlic oil, and a water/oil emulsion was prepared by mechanical stirring (i.e., dispersing homogenizer). The emulsion was sprayed with a rotary disc atomizer (with an emulsion temperature of 75°C, inlet temperature of 180°C, and outlet temperature of 87°C) into an atomizer vessel in which hot air was blown, and the produced free-flowing powder having an average particle size of 150 µm was collected in a cyclone. The final product contained 72.7% of arabic gum, 19.5% of cinnamaldehyde, 2.8% of garlic oil, and 5% of water by weight.

### Example 2: Stability of the Agglomerated Composition

The agglomerated compositions were mixed with a commercial inorganic based vitamin-mineral premix or a commercial organic based vitamin-mineral premix and stability of the cinnamaldehyde was monitored at regular intervals over 6 weeks. The results are present in Table 1 below.

| Table 1. Percentage of cinnamaldehyde | | |
|---|---|---|
| Week | Inorganic premix | Organic premix |
| 0 | 100 | 100 |
| 1 | 102 | 87 |
| 3 | 93 | 83 |
| 6 | 88 | 81 |

After 6 weeks, more that 80% of the cinnamaldehyde was still present.

### Example 3: Evaluation of Composition Comprising Methionine Source and Agglomerated Composition

A blended composition was prepared by mixing 965 kg of calcium salt of methionine hydroxy analog (i.e., MHA) and 35 kg of the agglomerated composition of Example 1. The performance of this blended composition was compared to that of MHA alone and the agglomerated composition alone in a single-flow continuous culture system. This system used forty-eight 2-L fermenters kept at 39°C and continuously stirred. Buffer solution (McDougall's buffer) and rumen fluid obtained from two fistulated Holstein cows fed a common diet were added (1,460 mL) to each fermenter in a 1:2 ratio at a target inflow and effluent rate of 6% per hour. Carbon dioxide was continuously flushed to the fermenters to maintain an anaerobic environment. Fermenters were fed 40 g of dry matter daily, split into 2 meals. These meals contained the individual components of the composition as well as the blend. Fermenters were allowed to run for a total of 10 days, with the first 7 days serving as an acclimation period and the last 3 days serving as time for sample collection. During sample collection effluent levels were recorded and one half of the effluent collected over the previous 24 h was taken as a subsample and frozen. These subsamples were compiled for each fermenter and stored for analysis. Fermenter pH was measured prior to feeding (0 h) and 0, 2, 4, and 8 h post feeding. At 0, 2, 4, and 8 h post feeding a 10 mL sample was taken from each fermenter and frozen at -20°C, composited by hour for each fermenter over the collection period, and analyzed. On 10 d of each fermenter run, fermenter contents were collected and stored at -20°C for analysis. The levels of fatty acids in the samples were analyzed using standard procedures.

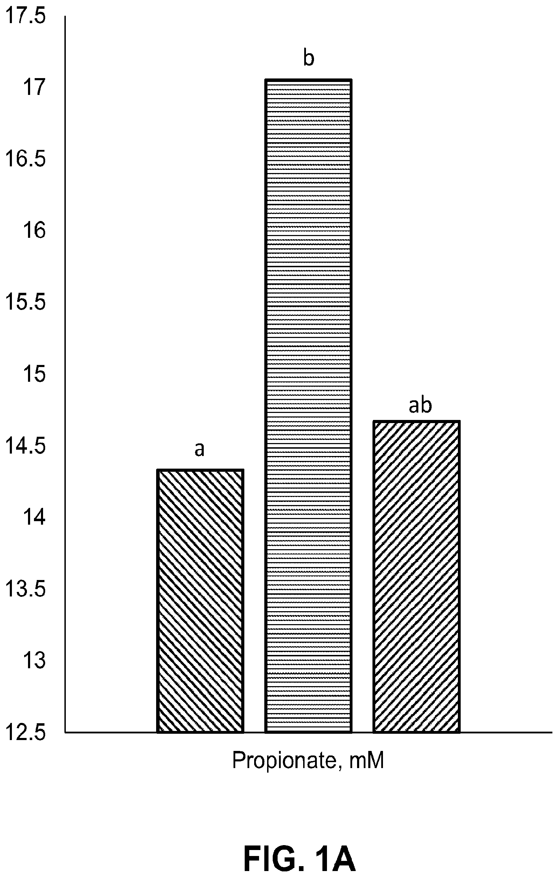

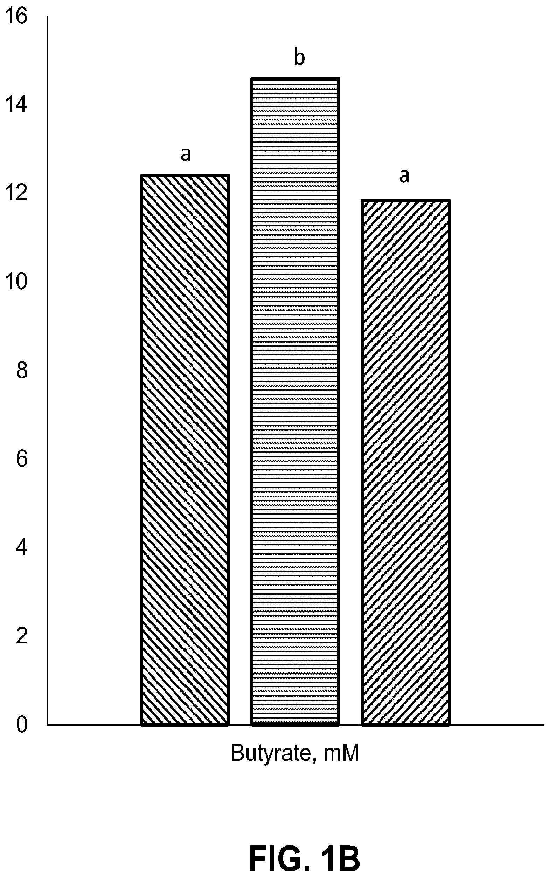

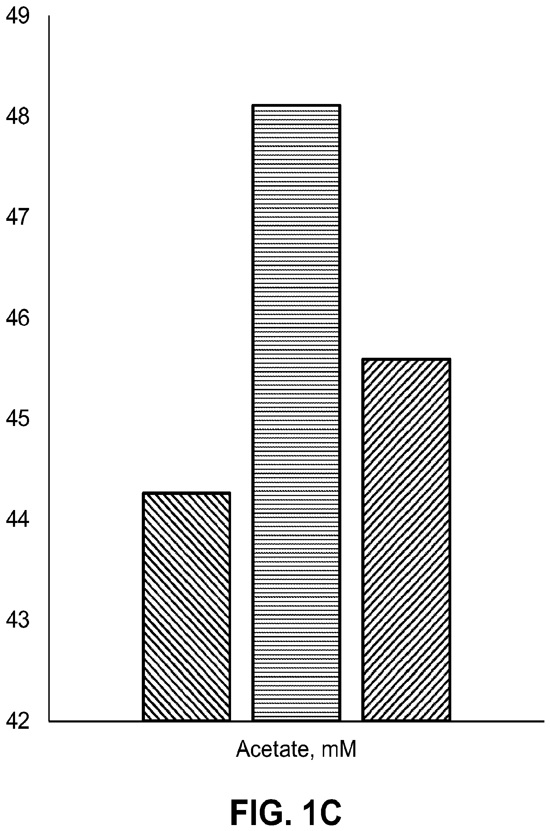

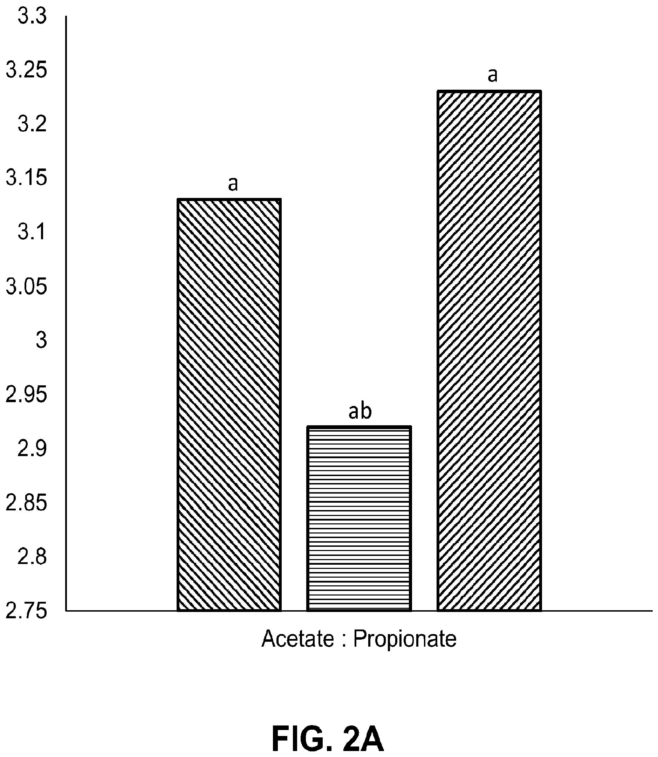

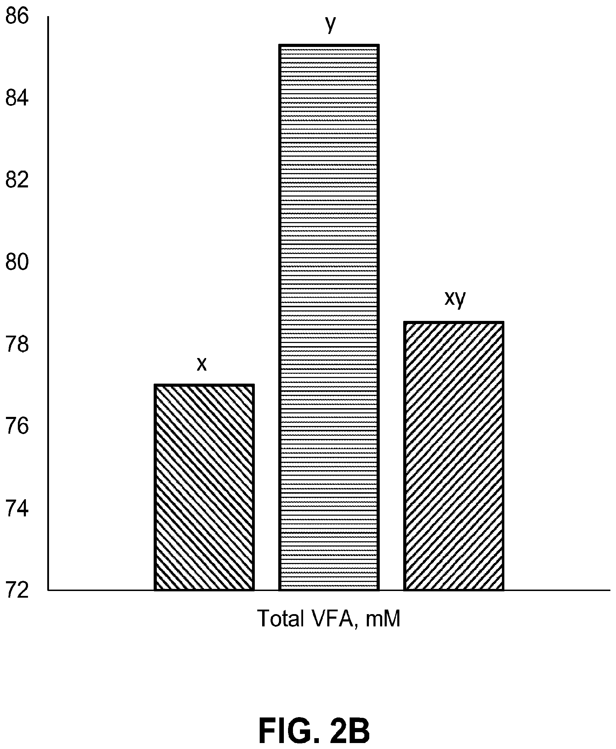

The blended composition improved fermentation by increasing the levels of volatile fatty acids (i.e., end products of rumen fermentation) by 11 % relative to MHA or 8.6% relative to the agglomerated composition (see FIG. **2B****).** More specifically, propionate (i.e., the substrate from which glucose is made) was increased by about 19% relative to MHA or 16% relative to the agglomerated composition. (FIG. **1A****)** suggesting that the cow can make more glucose and possibly more lactose which will result in increased milk yield. This increase in milk yield for greater lactose concentrations is due to the role lactose has as an osmotic regulator for milk synthesis.

## Claims

1. A composition comprising a plurality of particles comprising at least two essential oils dispersed in a matrix, wherein the matrix comprises at least one agglomerating agent comprising arabic gum, and the at least two essential oils consist of garlic oil and cinnamaldehyde, wherein cinnamaldehyde is present in an amount from about 17.5% to about 21.5% by weight of the composition, garlic oil is present in an amount from about 2.5% to about 3.1% by weight of the composition, arabic gum is present in an amount from about 70% to about 75% by weight of the composition, and the matrix is present in an amount from about 65% to about 80% by weight of the composition.

2. The composition of claim 1, wherein the at least one agglomerating agent further comprises a complex carbohydrate, a protein, or a combination thereof, wherein the complex carbohydrate is chosen from agar, albizia gum, alginate, arabinoxylan, beta glucan, carob gum, carrageenan, cellulose, cellulose derivative, chicle gum, chitosan, curdlan, dammar gum, dextran, diutan gum, fenugreek gum, fucoidan, galactomannan, gellan gum, ghatti gum, glucomannan, guar gum, hakea gum, honey locust gum, hupu gum, karaya gum, khaya gum, lignin, locust bean gum, maltodextrin, mastic gum, pectin, pullulan, starch, modified starch, tamarind gum, tara gum, tragacanth gum, welan gum, or xanthan gum, and the protein is chosen from collagen, gelatin, milk protein, egg protein, pea protein, soy protein, wheat protein, zein protein, isolate or hydrolysate of any of the foregoing, or modified version of any of the foregoing.

3. The composition of claim 1 or 2, further comprising less than about 10% of water by weight, wherein the total amount of the at least two essential oils, the matrix, and water equals 100% by weight.

4. The composition of any one of claims 1 to 3, wherein the composition comprises particles having an average diameter particle size from about 50 micrometers to about 250 micrometers.

5. The composition of any one of claims 1 to 4, wherein the composition further comprises an antioxidant, a surfactant, a filler, and/or a binder.

6. The composition of any one of claims 1 to 5, wherein the composition is devoid of coatings, outer shells, and/or hydrophobic layers.

7. The composition of any one of claims 1 to 6, wherein the cinnamaldehyde and garlic oil are present at a ratio of about 7 to 1.

## Patentansprüche

1. Zusammensetzung, umfassend eine Vielzahl von Partikeln, die mindestens zwei ätherische Öle umfasst, die in einer Matrix dispergiert sind, wobei die Matrix mindestens ein Agglomerationsmittel umfasst, das Gummi arabicum umfasst, und die mindestens zwei ätherischen Öle aus Knoblauchöl und Zimtaldehyd bestehen, wobei Zimtaldehyd in einer Menge von etwa 17,5 Gew.-% bis etwa 21,5 Gew.-% der Zusammensetzung vorhanden ist, Knoblauchöl in einer Menge von etwa 2,5 Gew.-% bis etwa 3,1 Gew.-% der Zusammensetzung vorhanden ist, Gummi arabicum in einer Menge von etwa 70 Gew.-% bis etwa 75 Gew.-% der Zusammensetzung vorhanden ist und die Matrix in einer Menge von etwa 65 Gew.-% bis etwa 80 Gew.-% der Zusammensetzung vorhanden ist.

2. Zusammensetzung nach Anspruch 1, wobei das mindestens eine Agglomerationsmittel ferner ein komplexes Kohlenhydrat, ein Protein, oder eine Kombination davon umfasst, wobei das komplexe Kohlenhydrat ausgewählt ist aus Agar, Albizia-Gummi, Alginat, Arabinoxylan, Beta-Glucan, Carob-Gummi, Carrageen, Cellulose, Cellulosederivat, Chicle-Gummi, Chitosan, Curdlan, Dammar-Gummi, Dextran, Diutan-Gummi, Bockshornkleegummi, Fucoidan, Galactomannan, Gellan-Gummi, Ghatti-Gummi, Glucomannan, Guarkernmehl, Hakea-Gummi, Gleditischiengummi, Hupu-Gummi, Karaya-Gummi, Khaya-Gummi, Lignin, Johannisbrotkernmehl, Maltodextrin, Mastixgummi, Pektin, Pullulan, Stärke, modifizierter Stärke, Tamarindengummi, Tara-Gummi, Traganth-Gummi, Welan-Gummi oder XanthanGummi, und das Protein ausgewählt ist aus Kollagen, Gelatine, Milchprotein, Eiprotein, Erbsenprotein, Sojaprotein, Weizenprotein, Zeinprotein, Isolat oder Hydrolysat eines beliebigen der Vorstehenden oder einer modifizierten Version eines beliebigen des Vorstehenden.

3. Zusammensetzung nach Anspruch 1 oder 2, ferner umfassend weniger als etwa 10 Gew.-% Wasser, wobei die Gesamtmenge der mindestens zwei ätherischen Öle, der Matrix und des Wassers gleich 100 Gew.-% ist.

4. Zusammensetzung nach einem der Ansprüche 1 bis 3, wobei die Zusammensetzung Partikel mit einer durchschnittlichen Durchmesserpartikelgröße von etwa 50 Mikrometer bis etwa 250 Mikrometer umfasst.

5. Zusammensetzung nach einem der Ansprüche 1 bis 4, wobei die Zusammensetzung ferner ein Antioxidans, ein Tensid, einen Füllstoff und/oder ein Bindemittel umfasst.

6. Zusammensetzung nach einem der Ansprüche 1 bis 5, wobei die Zusammensetzung frei von Beschichtungen, Außenhüllen und/oder hydrophoben Schichten ist.

7. Zusammensetzung nach einem der Ansprüche 1 bis 6, wobei der Zimtaldehyd und das Knoblauchöl in einem Verhältnis von etwa 7 zu 1 vorhanden sind.

## Revendications

1. Composition comprenant une pluralité de particules comprenant au moins deux huiles essentielles dispersées dans une matrice, dans laquelle la matrice comprend au moins un agent agglomérant comprenant de la gomme arabique, et les au moins deux huiles essentielles étant constituées d'huile d'ail et de cinnamaldéhyde, dans laquelle le cinnamaldéhyde est présent en une quantité d'environ 17,5 % à environ 21,5 % en poids de la composition, l'huile d'ail est présente en une quantité d'environ 2,5 % à environ 3,1 % en poids de la composition, la gomme arabique est présente en une quantité d'environ 70 % à environ 75 % en poids de la composition, et la matrice est présente en une quantité d'environ 65 % à environ 80 % en poids de la composition.

2. Composition de la revendication 1, dans laquelle l'au moins un agent agglomérant comprend en outre un glucide complexe, une protéine, ou une combinaison de ceux-ci, dans laquelle le glucide complexe est choisi parmi l'agar, la gomme d'albizia, l'alginate, l'arabinoxylane, le bêta-glucane, la gomme de caroube, un carraghénane, la cellulose, un dérivé de cellulose, la gomme chicle, le chitosane, le curdlan, la gomme dammar, le dextrane, la gomme de diutane, la gomme de fenugrec, le fucoïdane, le galactomannane, la gomme gellane, la gomme ghatti, le glucomannane, la gomme de guar, la gomme hakea, la gomme de févier, la gomme hupu, la gomme karaya, la gomme de khaya, la lignine, la gomme de caroube, la maltodextrine, la gomme de mastic, la pectine, un pullulane, l'amidon, l'amidon modifié, la gomme de tamarin, la gomme de tara, la gomme adragante, la gomme de welan, ou la gomme de xanthane, et la protéine est choisie parmi le collagène, la gélatine, les protéines de lait, la protéine d'œuf, les protéines de pois, les protéines de soja, les protéines de blé, la protéine zéine, un isolat ou un hydrolysat de l'un quelconque de ce qui précède, ou une version modifiée de l'un quelconque de ce qui précède.

3. Composition de l'une des revendications 1 ou 2, comprenant en outre moins d'environ 10 % d'eau en poids, dans laquelle la quantité totale des au moins deux huiles essentielles, de la matrice et de l'eau est égale à 100 % en poids.

4. Composition de l'une quelconque des revendications 1 à 3, dans laquelle la composition comprend des particules présentant un diamètre particulaire moyen d'environ 50 micromètres à environ 250 micromètres.

5. Composition de l'une quelconque des revendications 1 à 4, dans laquelle la composition comprend en outre un antioxydant, un tensioactif, une charge et/ou un liant.

6. Composition de l'une quelconque des revendications 1 à 5, dans laquelle la composition est dépourvue de revêtements, d'enveloppes extérieures et/ou de couches hydrophobes.

7. Composition de l'une quelconque des revendications 1 à 6, dans laquelle le cinnamaldéhyde et l'huile d'ail sont présents dans un rapport d'environ 7 à 1.
